# EUROPEAN PATENT SPECIFICATION

(11) **EP 3 502 960 B1**
(45) Date of publication and mention of the grant of the patent: **23.04.2025**
(21) Application number: 18208273.5
(22) Date of filing: 26.11.2018
(51) Int. Cl.: G06V 10/10, G06V 10/22, G06V 10/20, G06V 20/20, G06Q 10/20, G06Q 30/0645, G06Q 40/08, G07C 5/00, G07C 5/08

(54) **MOBILE TERMINAL AND METHOD FOR CONTROLLING THE SAME**
MOBILES ENDGERÄT UND VERFAHREN ZUR STEUERUNG DAVON
TERMINAL MOBILE ET SON PROCÉDÉ DE COMMANDE

(30) Priority: 21.12.2017 KR 20170177454
(43) Date of publication of application: 26.06.2019
(73) Proprietor: LG Electronics Inc., Seoul 07336 (KR)
(72) Inventor: PARK, Doyun, Seoul 06772 (KR); CHO, Jaehoon, Seoul 06772 (KR); HEO, Heejeong, Seoul 06772 (KR)
(74) Representative: Vossius & Partner Patentanwälte Rechtsanwälte mbB

(56) References cited:
- EP-A1- 2 447 905
- US-A1- 2014 313 334
- US-A1- 2015 186 988
- US-A1- 2015 287 130
- US-B1- 8 712 893

## Description

### BACKGROUND OF THE INVENTION

### 1. Field of the Invention

The present invention relates to a mobile terminal having a camera and a touch screen.

### 2. Description of the Related art

Terminals may be divided into mobile/portable terminals and stationary terminals according to mobility. Also, the mobile terminals may be classified into handheld types and vehicle mount types according to whether or not a user can directly carry.

Mobile terminals have become increasingly more functional. Examples of such functions include data and voice communications, capturing images and video via a camera, recording audio, playing music files via a speaker system, and displaying images and video on a display unit. Some mobile terminals include additional functionality which supports electronic game playing, while other terminals are configured as multimedia players. Specifically, in recent time, mobile terminals may receive broadcast and multicast signals to allow viewing of video or television programs.

As it becomes multifunctional, a mobile terminal can be allowed to capture still images or moving images, play music or video files, play games, receive broadcast and the like, so as to be implemented as an integrated multimedia player.

In recent years, with an introduction of a sharing economy based on collaborative consumption, in which produced products are shared by several people, a platform where high-priced products such as vehicles and audio which various people can borrow for use without possession is under development. For example, when a vehicle is registered in the platform, multiple users may use the vehicle at different times and pay for the use of the vehicle.

A specific article (product) is borrowed by plural users and thus is likely to be damaged, but it is difficult to prove by whom, when and how the damage has occurred.

US 2015/287130 A1 discloses systems and methods for assessing damage of a rental vehicle. US 2014/313334 A1 relates to a technique for image acquisition and management. US 2015/186988 A1 discloses a system, method and apparatus for the automatic detection of property features when documenting the condition of tangible property. EP 2 447 905 A1 relates to techniques for automating rental car transactions. US 8 712 893 B1 discloses an enhanced claims damage estimation using aggregate display.

### SUMMARY OF THE INVENTION

The present invention is directed to solving the above-mentioned problems and other drawbacks. The invention is a mobile terminal as defined in claim 1. Dependent claims describe preferred embodiments.

The mobile terminal can be used for efeasily generating proof data for proving (verifying) damage on a product registered in a server when a user borrows or returns the product, and for fast detecting (searching for) new damage on a product registered in a server and guiding the detection result to a user.

To achieve these and other advantages and in accordance with the purpose of this specification, as embodied and broadly described herein, there is provided a mobile terminal.

The mobile terminal includes a camera, a touch screen configured to output an image received from the camera, a wireless communication unit configured to receive vehicle information related to the vehicle from a server or a vehicle, and a controller configured to control the touch screen so that guide information for guiding a moving direction to capture a predetermined portion of the vehicle based on the vehicle information is output on the image.

According to one embodiment, the controller may control the touch screen to output at least one graphic object on the image to guide one or more damaged portions, respectively, when information related to the one or more damaged portions is included in the vehicle information.

According to one embodiment, the one or more damaged portions may be classified into a first group included in the image and a second group not included in the image based on the image currently output on the touch screen, and a damaged portion included in the first group and a damaged portion included in the second group may be guided in different manners.

According to one embodiment, the damaged portion included in the first group and the damaged portion included in the second group may change as the image changes.

According to one embodiment, the controller may control the touch screen to output a first graphic object of a first damaged portion included in the first group on a position, which corresponds to the first damaged portion, on the vehicle included in the image.

According to one embodiment, the controller may control the touch screen to output a second graphic object of a second damaged portion included in the second group to be output in an area, in which the vehicle is not included, of an entire area of the image.

According to one embodiment, the controller may control the touch screen to output detailed information related to a damaged portion corresponding to a touch-applied graphic object when the touch is applied to the graphic object.

According to one embodiment, the controller may detect a new damaged portion not included in the vehicle information, and control the touch screen to output an icon for guiding the new damaged portion on the image when the new damaged portion is detected.

According to one embodiment, the controller may control the wireless communication unit to transmit information related to the new damaged portion to the server or the vehicle.

According to one embodiment, when the new damaged portion is detected, the controller may control the touch screen to output at least part of the image in a first area of the touch screen, and to output a previously-captured image as a reference for determining the new damaged portion in a second area of the touch screen.

According to one embodiment, the predetermined portion of the guide information may be changed into the new damaged portion when the new damaged portion is detected, and the changed guide information may guide a moving direction so that the camera has the same frame as the previously-captured image.

According to one embodiment, the controller may receive the previously-captured image from the server or the vehicle, and detect the new damaged portion through comparison between the previously-captured image and the image.

The controller selects at least one of components included in the vehicle using the image and transmits a test command to the vehicle through the wireless communication unit so as to perform a test operation for the selected component.

According to one embodiment, the controller may select the at least one component using the image when a rate of change of the image is within a reference range for a predetermined time.

The selected component changes according to the image.

According to one embodiment, the controller may divide the vehicle into a first part which is completely captured, and a second part which is needed to be captured as the capturing progresses, and control the touch screen to output a guide image on the image such that the first part and the second part are distinguished from each other.

According to one embodiment, the mobile terminal may further include a sensor configured to sense a current location. The controller may calculate a distance between the vehicle and the current location, and control the camera and the touch screen to output the image when the calculated distance is within a predetermined range.

According to one embodiment, the controller may control the touch screen to output navigation information for guiding a starting point to start capturing on the image when a size of an area in which the vehicle is not included or is included in the image is smaller than a reference size.

According to one embodiment, the controller may control the wireless communication unit to perform at least one of a first control for preventing unlocking of the vehicle and a second control for preventing a start-up of the vehicle until the capturing for the predetermined portion satisfies a predetermined condition.

According to one embodiment, the controller may control the wireless communication unit to transmit an image of the predetermined portion to the server or the vehicle, and control the touch screen to output an interface for unlocking the vehicle or starting up the vehicle when an approval message for the image is received.

According to a non-claimed example, there is provided a method of controlling an application installed in a mobile terminal provided with a camera and a touch screen to control at least one of the camera and the touch screen.

The exemplary method of controlling the application may include receiving vehicle information related to the vehicle from a server or the vehicle, controlling the touch screen to output an image received from the camera, and controlling the touch screen to output guide information on the image to guide a moving direction such that a predetermined portion of the vehicle is captured based on the vehicle information when the vehicle is included in the image.

According to one example, the method may further include controlling the touch screen to output at least one graphic object on the image to guide one or more of damaged portions, respectively, when information related to the one or more damaged portions is included in the vehicle information. The one or more damaged portions may be classified into a first group included in the image and a second group not included in the image based on the image currently output on the touch screen, and a damaged portion included in the first group and a damaged portion included in the second group may be guided in different manners.

According to one example, the method may further include detecting a new damaged portion not included in the vehicle information, and controlling the touch screen to output an icon for guiding the new damaged portion on the image when the new damaged portion is detected.

According to one example, the method may further include selecting at least one of components included in the vehicle using the image, and transmitting a test command to the vehicle so that the selected component performs a test operation.

Hereinafter, effects of a system comprising a mobile terminal according to the present invention will be described.

According to at least one of the embodiments of the present invention, since a mobile terminal guides a portion to be captured before borrowing or returning an article registered in a server, a user can intuitively recognize which part of the article should be captured, and generate proof data for the article easily and quickly.

In addition, the user can check which part of the vehicle has been damaged simply by capturing the vehicle with holding the mobile terminal, and can easily and quickly confirm a new damaged portion.

### BRIEF DESCRIPTION OF THE DRAWINGS

FIG. 1A is a block diagram of a mobile terminal in accordance with one exemplary embodiment of the present invention.
FIGS. 1B and 1C are conceptual views illustrating one example of a mobile terminal according to the present invention, viewed from different directions.
FIG. 2 is a block diagram illustrating a system (or a platform) including a mobile terminal according to the present invention.
FIG. 3 is a flowchart illustrating a method of controlling a mobile terminal in accordance with one embodiment of the present invention.
FIGS. 4A to 4F are exemplary views illustrating operations of the mobile terminal according to the control method of FIG. 3.
FIG. 5 is a flowchart illustrating a control method of a mobile terminal for guiding a damaged portion included in a vehicle.
FIG. 6A to 6C are exemplary views illustrating operations of the mobile terminal according to the control method of FIG. 5.
FIG. 7 is a flowchart illustrating a control method of a mobile terminal for guiding a new damaged portion included in a vehicle.
FIGS. 8 and 9A to 9D are exemplary views illustrating operations of the mobile terminal according to the control method of FIG. 7.
FIG. 10 is a flowchart illustrating a control method of a mobile terminal for testing at least one component provided in a vehicle.
FIG. 11 is an exemplary view illustrating an operation of the mobile terminal according to the control method of FIG. 10.
FIG. 12 is a flowchart illustrating an operation executed in the system of FIG. 2 in the order of time.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same or similar reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. The accompanying drawings are used to help easily understand the technical idea of the present disclosure and it should be understood that the idea of the present disclosure is not limited by the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the another element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. According to examples not covered by the claims, these teachings may also be applied to stationary terminals such as digital TV, desktop computers, and the like.

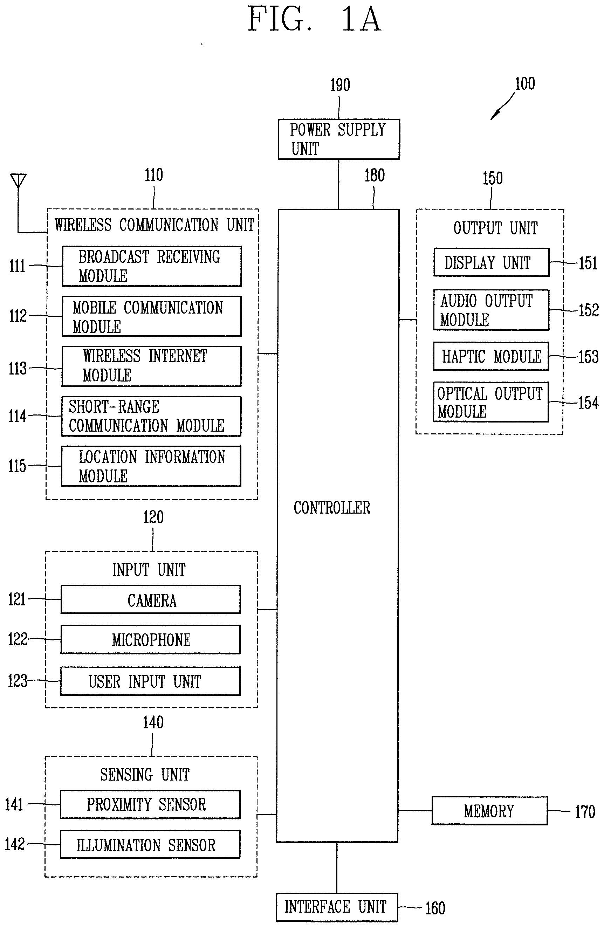

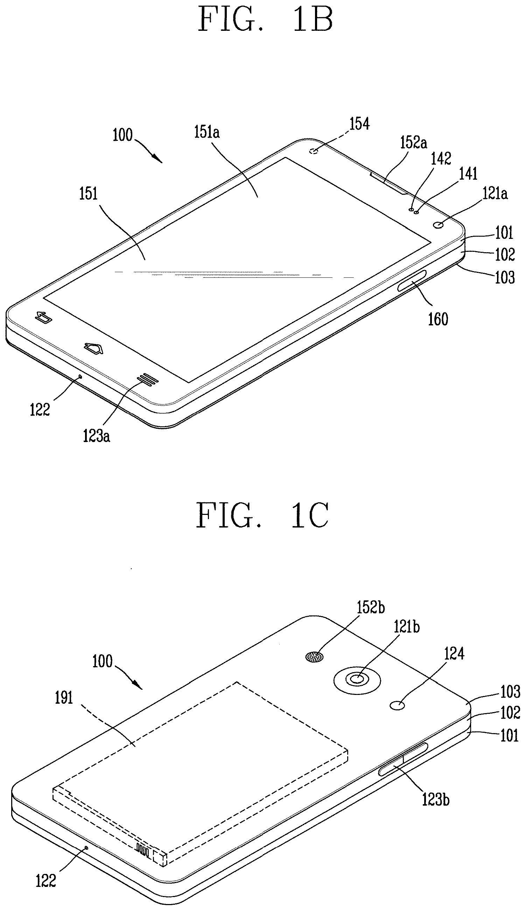

Referring to FIGS. 1A to 1C, FIG. 1A is a block diagram of a mobile terminal in accordance with one exemplary embodiment of the present invention, and FIGS. 1B and 1C are conceptual views illustrating one example of a mobile terminal, viewed from different directions.

The mobile terminal 100 may be shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

In more detail, the wireless communication unit 110 may typically include one or more modules which permit communications such as wireless communications between the mobile terminal 100 and a wireless communication system, communications between the mobile terminal 100 and another mobile terminal, or communications between the mobile terminal 100 and an external server. Further, the wireless communication unit 110 may typically include one or more modules which connect the mobile terminal 100 to one or more networks.

The wireless communication unit 110 may include one or more of a broadcast receiving module 111, a mobile communication module 112, a wireless Internet module 113, a short-range communication module 114, and a location information module 115.

The input unit 120 may include a camera 121 or an image input unit for obtaining images or video, a microphone 122, which is one type of audio input device for inputting an audio signal, and a user input unit 123 (for example, a touch key, a mechanical key, and the like) for allowing a user to input information. Data (for example, audio, video, image, and the like) may be obtained by the input unit 120 and may be analyzed and processed according to user commands.

The sensing unit 140 may typically be implemented using one or more sensors configured to sense internal information of the mobile terminal, the surrounding environment of the mobile terminal, user information, and the like. For example, the sensing unit 140 may include at least one of a proximity sensor 141, an illumination sensor 142, a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like).The mobile terminal disclosed herein may be configured to utilize information obtained from one or more sensors of the sensing unit 140, and combinations thereof.

The output unit 150 may typically be configured to output various types of information, such as audio, video, tactile output, and the like. The output unit 150 may be shown having at least one of a display unit 151, an audio output module 152, a haptic module 153, and an optical output module 154. The display unit 151 may have an inter-layered structure or an integrated structure with a touch sensor in order to implement a touch screen. The touch screen may function as the user input unit 123 which provides an input interface between the mobile terminal 100 and the user and simultaneously provide an output interface between the mobile terminal 100 and a user.

The interface unit 160 serves as an interface with various types of external devices that are coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like).Application programs may be stored in the memory 170, installed in the mobile terminal 100, and executed by the controller 180 to perform an operation (or function) for the mobile terminal 100.

The controller 180 typically functions to control an overall operation of the mobile terminal 100, in addition to the operations associated with the application programs. The controller 180 may provide or process information or functions appropriate for a user by processing signals, data, information and the like, which are input or output by the aforementioned various components, or activating application programs stored in the memory 170.

Also, the controller 180 may control at least some of the components illustrated in FIG. 1A, to execute an application program that have been stored in the memory 170. In addition, the controller 180 may control at least two of those components included in the mobile terminal to activate the application program.

The power supply unit 190 may be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

At least part of the components may cooperatively operate to implement an operation, a control or a control method of a mobile terminal according to various embodiments disclosed herein. Also, the operation, the control or the control method of the mobile terminal may be implemented on the mobile terminal by an activation of at least one application program stored in the memory 170.

Hereinafter, description will be given in more detail of the aforementioned components with reference to FIG. 1A, prior to describing various embodiments implemented through the mobile terminal 100.

First, regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules may be utilized to facilitate simultaneous reception of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000 (Code Division Multi Access 2000), EV-DO (Enhanced Voice-Data Optimized or Enhanced Voice-Data Only), Wideband CDMA (WCDMA), High Speed Downlink Packet access (HSDPA), HSUPA (High Speed Uplink Packet Access), Long Term Evolution (LTE) , LTE-A (Long Term Evolution-Advanced), and the like).

The wireless signal may include various types of data depending on a voice call signal, a video call signal, or a text / multimedia message transmission / reception.

The wireless Internet module 113 refers to a module for wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), High Speed Uplink Packet Access (HSUPA), Long Term Evolution (LTE) , LTE-advanced (LTE-A) and the like. The wireless Internet module 113 may transmit/receive data according to one or more of such wireless Internet technologies, and other Internet technologies as well.

When the wireless Internet access is implemented according to, for example, WiBro, HSDPA, HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

Here, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100).The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of at least part of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position (or current position) of the mobile terminal. As an example, the location information module 115 includes a Global Position System (GPS) module, a Wi-Fi module, or both. For example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module. If desired, the location information module 115 may alternatively or additionally function with any of the other modules of the wireless communication unit 110 to obtain data related to the position of the mobile terminal. The location information module 115 is a module used for acquiring the position (or the current position) and may not be limited to a module for directly calculating or acquiring the position of the mobile terminal.

Examples of such inputs include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. Meanwhile, the cameras 121 may be arranged in a matrix configuration to permit a plurality of images having various angles or focal points to be input to the mobile terminal 100. Also, the cameras 121 may be located in a stereoscopic arrangement to acquire left and right images for implementing a stereoscopic image.

The microphone 122 processes an external audio signal into electric audio (sound) data. The processed audio data can be processed in various manners according to a function being executed in the mobile terminal 100. If desired, the microphone 122 may include assorted noise removing algorithms to remove unwanted noise generated in the course of receiving the external audio signal.

The user input unit 123 is a component that permits input by a user. Such user input may enable the controller 180 to control operation of the mobile terminal 100. The user input unit 123 may include one or more of a mechanical input element (for example, a mechanical key, a button located on a front and/or rear surface or a side surface of the mobile terminal 100, a dome switch, a jog wheel, a jog switch, and the like), or a touch-sensitive input element, among others. As one example, the touch-sensitive input element may be a virtual key, a soft key or a visual key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like, and generate a corresponding sensing signal. The controller 180 generally cooperates with the sending unit 140 to control operations of the mobile terminal 100 or execute data processing, a function or an operation associated with an application program installed in the mobile terminal based on the sensing signal. The sensing unit 140 may be implemented using any of a variety of sensors, some of which will now be described in more detail.

The proximity sensor 141 refers to a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data (or information) according to whether a touch with respect to a point on the touch screen is either a proximity touch or a contact touch.

A touch sensor can sense a touch (or a touch input) applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

Meanwhile, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize location information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121, which has been depicted as a component of the input unit 120, typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors (TRs) at rows and columns to scan content received at the photo sensor using an electrical signal which changes according to the quantity of applied light. Namely, the photo sensor may calculate the coordinates of the physical object according to variation of light to thus obtain location information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

Also, the display unit 151 may be implemented as a stereoscopic display unit for displaying stereoscopic images.

A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 may receive audio data from the wireless communication unit 110 or output audio data stored in the memory 170 during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceives, or otherwise experiences. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal therethrough. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.).The memory 170 may store data related to various patterns of vibrations and audio which are output in response to touch inputs on the touch screen.

The memory 170 may include one or more types of storage mediums including a flash memory type, a hard disk type, a solid state disk (SSD) type, a silicon disk drive (SDD) type, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control operations relating to application programs and the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provides internal power and supply the appropriate power required for operating respective elements and components included in the mobile terminal 100 under the control of the controller 180. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring to FIGS. 1B and 1C, the disclosed mobile terminal 100 includes a bar-like terminal body. However, the mobile terminal 100 may alternatively be implemented in any of a variety of different configurations. Examples of such configurations include watch type, clip-type, glasses-type, or a folder-type, flip-type, slide-type, swing-type, and swivel-type in which two and more bodies are combined with each other in a relatively movable manner, and combinations thereof. Discussion herein will often relate to a particular type of mobile terminal. However, such teachings with regard to a particular type of mobile terminal will generally apply to other types of mobile terminals as well.

Here, considering the mobile terminal 100 as at least one assembly, the terminal body may be understood as a conception referring to the assembly.

The mobile terminal 100 will generally include a case (for example, frame, housing, cover, and the like) forming the appearance of the terminal. In this embodiment, the case is formed using a front case 101 and a rear case 102. Various electronic components are interposed into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. In this case, a rear cover 103 is shown covering the electronic components, and this cover may be detachably coupled to the rear case 102. Therefore, when the rear cover 103 is detached from the rear case 102, the electronic components mounted on the rear case 102 are exposed to the outside.

As illustrated, when the rear cover 103 is coupled to the rear case 102, a side surface of the rear case 102 may partially be exposed. In some cases, upon the coupling, the rear case 102 may also be completely shielded by the rear cover 103. Meanwhile, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this case, a mobile terminal 100 having a uni-body is formed in such a manner that synthetic resin or metal extends from a side surface to a rear surface.

Meanwhile, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal 100 may include a display unit 151, first and second audio output module 152a and 152b, a proximity sensor 141, an illumination sensor 142, an optical output module 154, first and second cameras 121a and 121b, first and second manipulation units 123a and 123b, a microphone 122, an interface unit 160, and the like.

Hereinafter, as illustrated in FIGS. 1B and 1C, description will be given of the exemplary mobile terminal 100 in which the front surface of the terminal body is shown having the display unit 151, the first audio output module 152a, the proximity sensor 141, the illumination sensor 142, the optical output module 154, the first camera 121a, and the first manipulation unit 123a, the side surface of the terminal body is shown having the second manipulation unit 123b, the microphone 122, and the interface unit 160, and the rear surface of the terminal body is shown having the second audio output module 152b and the second camera 121b.

However, those components may not be limited to the arrangement. Some components may be omitted or rearranged or located on different surfaces. For example, the first manipulation unit 123a may be located on another surface of the terminal body, and the second audio output module 152b may be located on the side surface of the terminal body other than the rear surface of the terminal body.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

The display module 151 may include at least one of a liquid crystal display (LCD), a thin film transistor-LCD (TFT LCD), an organic light-emitting diode (OLED), a flexible display, a three-dimensional (3D) display and an e-ink display.

The display unit 151 may be implemented using two display devices, according to the configuration type thereof. For instance, a plurality of the display units 151 may be arranged on one side, either spaced apart from each other, or these devices may be integrated, or these devices may be arranged on different surfaces.

The display unit 151 may include a touch sensor that senses a touch with respect to the display unit 151 so as to receive a control command in a touch manner. Accordingly, when a touch is applied to the display unit 151, the touch sensor may sense the touch, and a controller 180 may generate a control command corresponding to the touch. Contents input in the touch manner may be characters, numbers, instructions in various modes, or a menu item that can be specified.

On the other hand, the touch sensor may be configured in a form of a film having a touch pattern and disposed between a window 151a and a display (not illustrated) on a rear surface of the window, or may be a metal wire directly patterned on the rear surface of the window. Alternatively, the touch sensor may be formed integrally with the display. For example, the touch sensor may be disposed on a substrate of the display, or may be provided inside the display.

In this way, the display unit 151 may form a touch screen together with the touch sensor, and in this case, the touch screen may function as the user input unit (123, see FIG. 1A).In some cases, the touch screen may replace at least some of functions of a first manipulation unit 123a.

The first audio output module 152a may be implemented as a receiver for transmitting a call sound to a user's ear and the second audio output module 152b may be implemented as a loud speaker for outputting various alarm sounds or multimedia playback sounds.

The window 151a of the display unit 151 may include a sound hole for emitting sounds generated from the first audio output module 152a. However, the present invention is not limited thereto, and the sounds may be released along an assembly gap between the structural bodies (for example, a gap between the window 151a and the front case 101).In this case, a hole independently formed to output audio sounds may not be seen or may otherwise be hidden in terms of appearance, thereby further simplifying the appearance of the mobile terminal 100.

The optical output module 154 may be configured to output light for indicating an event generation. Examples of such events may include a message reception, a call signal reception, a missed call, an alarm, a schedule alarm, an email reception, information reception through an application, and the like. When a user has checked a generated event, the controller 180 may control the optical output module 154 to stop the light output.

The first camera 121a may process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion. The first and second manipulation units 123a and 123b may employ any method if it is a tactile manner allowing the user to perform manipulation with a tactile feeling such as touch, push, scroll or the like. The first and second manipulation units 123a and 123b may also be manipulated through a proximity touch, a hovering touch, and the like, without a user's tactile feeling.

The drawings are illustrated on the basis that the first manipulation unit 123a is a touch key, but the present disclosure may not be necessarily limited to this. For example, the first manipulation unit 123a may be configured with a mechanical key, or a combination of a touch key and a push key.

The content received by the first and second manipulation units 123a and 123b may be set in various ways. For example, the first manipulation unit 123a may be used by the user to input a command such as menu, home key, cancel, search, or the like, and the second manipulation unit 123b may be used by the user to input a command, such as controlling a volume level being output from the first or second audio output module 152a or 152b, switching into a touch recognition mode of the display unit 151, or the like.

On the other hand, as another example of the user input unit 123, a rear input unit (not shown) may be disposed on the rear surface of the terminal body. The rear input unit may be manipulated by a user to input a command for controlling an operation of the mobile terminal 100. The content input may be set in various ways. For example, the rear input unit may be used by the user to input a command, such as power on/off, start, end, scroll or the like, controlling a volume level being output from the first or second audio output module 152a or 152b, switching into a touch recognition mode of the display unit 151, or the like. The rear input unit may be implemented into a form allowing a touch input, a push input or a combination thereof.

The rear input unit may be disposed to overlap the display unit 151 of the front surface in a thickness direction of the terminal body. As one example, the rear input unit may be disposed on an upper end portion of the rear surface of the terminal body such that a user can easily manipulate it using a forefinger when the user grabs the terminal body with one hand. However, the present disclosure may not be limited to this, and the position of the rear input unit may be changeable.

When the rear input unit is disposed on the rear surface of the terminal body, a new user interface may be implemented using the rear input unit. Also, the aforementioned touch screen or the rear input unit may substitute for at least part of functions of the first manipulation unit 123a located on the front surface of the terminal body. Accordingly, when the first manipulation unit 123a is not disposed on the front surface of the terminal body, the display unit 151 may be implemented to have a larger screen.

On the other hand, the mobile terminal 100 may include a finger scan sensor which scans a user's fingerprint. The controller may use fingerprint information sensed by the finger scan sensor as an authentication means. The finger scan sensor may be installed in the display unit 151 or the user input unit 123.

The microphone 122 may be configured to receive the user's voice, other sounds, and the like. The microphone 122 may be provided at a plurality of places, and configured to receive stereo sounds.

The interface unit 160 may serve as a path allowing the mobile terminal 100 to interface with external devices. For example, the interface unit 160 may be at least one of a connection terminal for connecting to another device (for example, an earphone, an external speaker, or the like), a port for near field communication (for example, an Infrared DaAssociation (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b may be further mounted to the rear surface of the terminal body. The second camera 121b may have an image capturing direction, which is substantially opposite to the direction of the first camera unit 121a.

The second camera 121b may include a plurality of lenses arranged along at least one line. The plurality of lenses may be arranged in a matrix form. The cameras may be referred to as an 'array camera.' When the second camera 121b is implemented as the array camera, images may be captured in various manners using the plurality of lenses and images with better qualities may be obtained.

The flash 124 may be disposed adjacent to the second camera 121b. When an image of a subject is captured with the camera 121b, the flash 124 may illuminate the subject.

The second audio output module 152b may further be disposed on the terminal body. The second audio output module 152b may implement stereophonic sound functions in conjunction with the first audio output module 152a, and may be also used for implementing a speaker phone mode for call communication.

At least one antenna for wireless communication may be disposed on the terminal body. The antenna may be embedded in the terminal body or formed in the case. For example, an antenna which configures a part of the broadcast receiving module 111 (see Figure 1A) may be retractable into the terminal body. Alternatively, an antenna may be formed in a form of film to be attached onto an inner surface of the rear cover 103 or a case including a conductive material may serve as an antenna.

The terminal body is provided with a power supply unit 190 (see FIG. 1A) for supplying power to the mobile terminal 100. The power supply unit 190 may include a batter 191 which is mounted in the terminal body or detachably coupled to an outside of the terminal body.

The battery 191 may receive power via a power cable connected to the interface unit 160. Also, the battery 191 may be (re)chargeable in a wireless manner using a wireless charger. The wireless charging may be implemented by magnetic induction or electromagnetic resonance.

On the other hand, the drawing illustrates that the rear cover 103 is coupled to the rear case 102 for shielding the battery 191, so as to prevent separation of the battery 191 and protect the battery 191 from an external impact or foreign materials. When the battery 191 is detachable from the terminal body, the rear case 103 may be detachably coupled to the rear case 102.

An accessory for protecting an appearance or assisting or extending the functions of the mobile terminal 100 may further be provided on the mobile terminal 100. As one example of the accessory, a cover or pouch for covering or accommodating at least one surface of the mobile terminal 100 may be provided. The cover or pouch may cooperate with the display unit 151 to extend the function of the mobile terminal 100. Another example of the accessory may be a touch pen for assisting or extending a touch input onto a touch screen.

On the other hand, the mobile terminal may extend to a wearable device to be wearable on a human body, beyond the typical use of a user grasping the terminal with a hand. These wearable devices include smart watches, smart glasses, and head mounted displays (HMDs). Hereinafter, examples of mobile terminals extended to the wearable device will be described.

The wearable device is able to exchange (or interlock) data with another mobile terminal 100. The short-range communication module 114 may sense or recognize the wearable device, which can perform communication with the mobile terminal 100, around the mobile terminal 100. In addition, when the sensed wearable device is a device which is authenticated to communicate with the mobile terminal 100, the controller 180, for example, may cause transmission of at least part of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

Hereinafter, embodiments related to a control method that can be implemented in a mobile terminal configured as above will be described with reference to the accompanying drawings. It will be apparent to those skilled in the art that the present invention may be embodied in other specific forms without departing from the essential characteristics thereof.

In the following description of the drawings, the drawings will be described in a clockwise direction or from top to bottom, with reference to a drawing given on an upper left side.

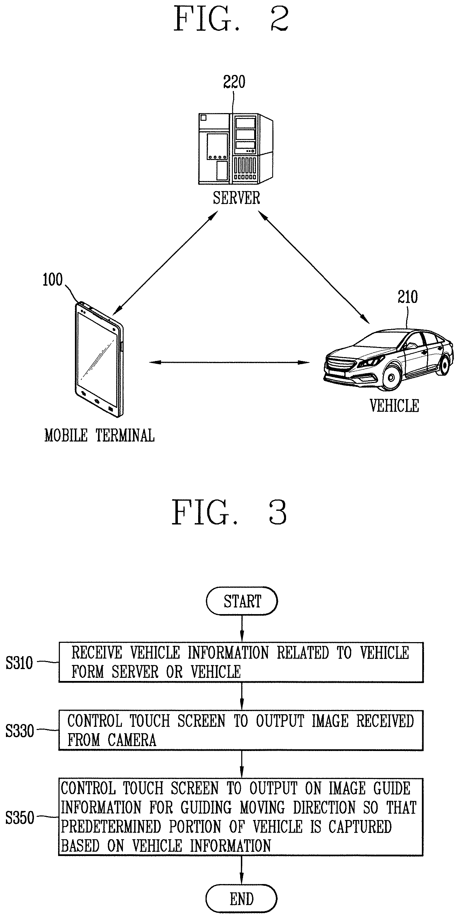

FIG. 2 is a block diagram illustrating a system (or a platform) including a mobile terminal according to the present invention.

A system (or a platform) for implementing a sharing economy includes a vehicle 210, a server 220, and a mobile terminal 100.

The system may provide a service using an application. For example, the application may be installed on the mobile terminal 100, and perform communication with the vehicle 210 and/or the server 220 using the wireless communication unit 110.

The application may transmit a user input, which is applied to the mobile terminal 100, to the vehicle 210 and/or the server 220, and display various execution screens on the touch screen 151 of the mobile terminal 100, in response to information received from the vehicle 210 and/or the server 220.

The server 220 registers one or more vehicles to supply a service, and manages a reservation schedule of each vehicle. Based on data received from the mobile terminal 100, the server 200 may provide a list of vehicles that the mobile terminal 100 can reserve, and assign a specific vehicle to the mobile terminal 100.

The mobile terminal 100 may provide the service through an interface provided by the application. For example, the mobile terminal 100 may display a list of vehicles to be used on a predetermined area, and set conditions for varying the list of vehicles based on a user input. When a specific vehicle is reserved, a user interface for releasing a door lock of the specific vehicle or turning on an ignition of the specific vehicle may be provided.

Hereinafter, description will be given in detail of a mobile terminal and a control method thereof, under assumption that one vehicle 210 of a plurality of vehicles registered in the server 220 has been assigned to the mobile terminal 100.

Particularly, in a state where the vehicle 210 has been reserved for the user of the mobile terminal 100, a case where the user of the mobile terminal 100 approaches the vehicle 210 at a reservation time or leaves the vehicle 210 at a return time will be exemplarily explained.

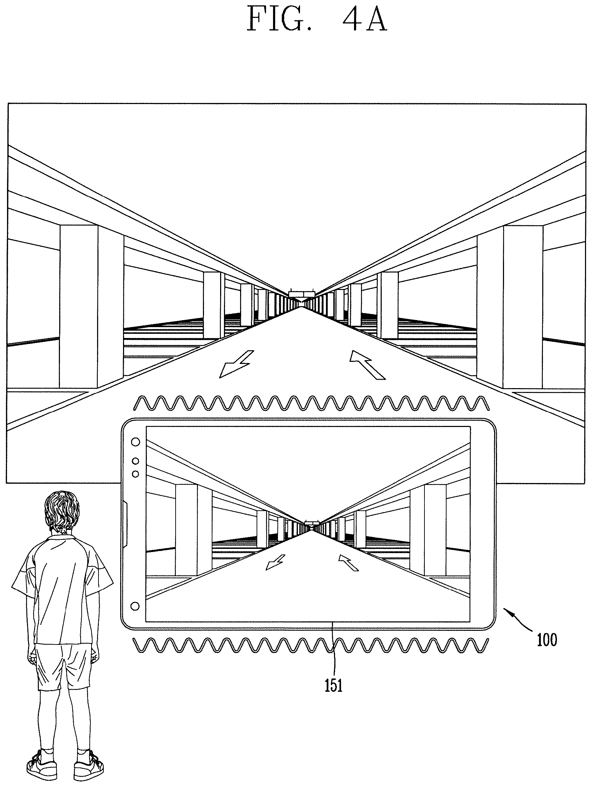

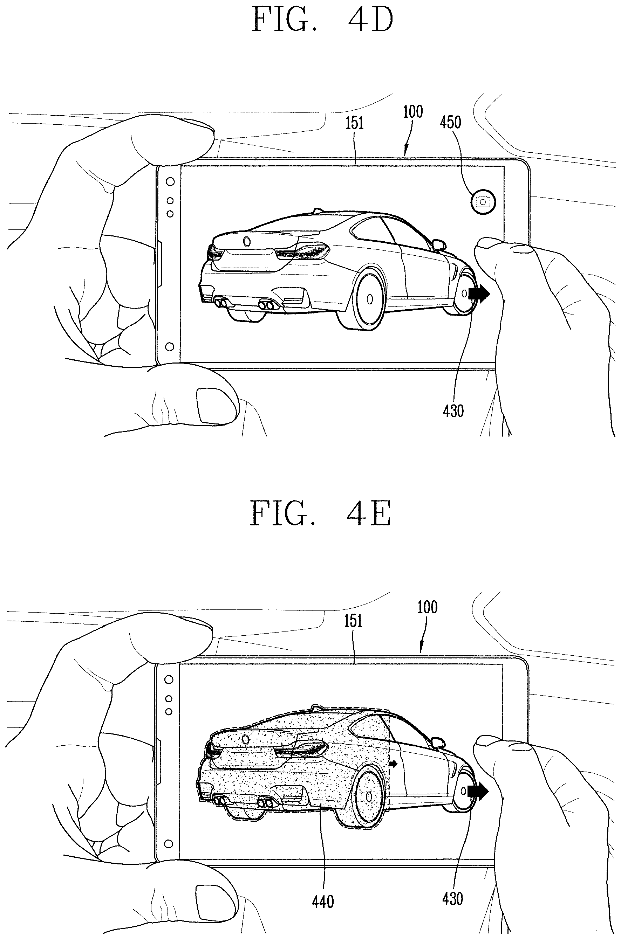

FIG. 3 is a flowchart illustrating a method of controlling a mobile terminal in accordance with one embodiment of the present invention, and FIGS. 4A to 4F are exemplary views illustrating operations of the mobile terminal according to the control method of FIG. 3.

The controller 180 receives vehicle information related to the vehicle 210 from the server 220 or the vehicle 210 (S310).

The vehicle information may include at least one of a vehicle number, a location, a vehicle type, a reservation time, and a return time of the vehicle 210, and an image captured by a camera provided in the vehicle 210. The vehicle information may be stored in a memory of the server 220 or a memory of the vehicle 210, and may be updated periodically or irregularly.

The vehicle information may further include damage information related to at least one damaged portion included in the vehicle 100.

As an example, the vehicle 100 may be reserved for use by a second user while being used by a first user. When the vehicle 100 is damaged during the use by the first user, the first user may register a damaged portion of the vehicle 100 in the server 220 using his/her terminal.

The mobile terminal 100 may provide a user interface for registering damage information. For example, the mobile terminal 100 may guide capturing of the damaged portion. When an image or video of the damaged portion is received from the mobile terminal 100, the server 220 may analyze a location, size, and degree of damage of the damaged portion through image analysis, and add the analysis information to the vehicle information as the damage information.

The vehicle 210 may be provided with a sensor for detecting damage, and may generate the damage information based on information received from the sensor. The damage information generated by the vehicle 210 may be added to the vehicle information. For example, when a left turn indicator of left and right turn indicators does not operate, information that the left turn indicator has been damaged may be added to the vehicle information.

The damage information may include at least one of a name of a damaged component, a position and size of a damaged portion, and a damaged degree.

The vehicle information may be transmitted to the mobile terminal 100 according to various time points and conditions.

For example, when the reservation between the mobile terminal 100 and the vehicle 210 is completed, the server 220 may transmit the vehicle information to the mobile terminal 100.

As another example, the server 220 or the vehicle 210 may transmit the vehicle information to the mobile terminal 100 based on a reservation time or a return time of the vehicle 210.

As another example, in a connected state between the mobile terminal 100 and the vehicle 210, when the mobile terminal 100 enters a predetermined range based on the vehicle 210, the server 220 or the vehicle 210 may transmit the vehicle information to the mobile terminal 100.

Next, the controller 180 may control the touch screen 151 to output an image received from the camera 121 (S330).

The controller 180 may activate the camera 121 when the application is executed in response to the user's request, and output the image received from the camera 121 on the touch screen 151.

The controller 180 may activate the camera 121 automatically even without the user's request and output the image received from the camera 121 on the touch screen 151 when a predetermined time is left up to the reservation time or return time. For example, when the reservation time is 13:30, the image may be automatically output on the touch screen 151 at 13:00. The predetermined time may vary according to the user's setting.

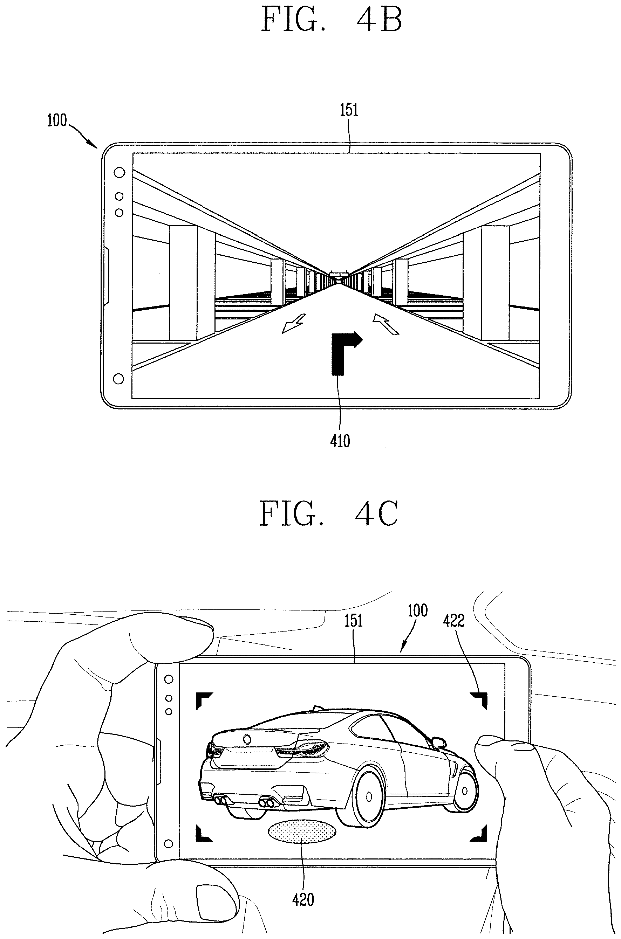

As illustrated in FIG. 4A, when the mobile terminal 100 enters a predetermined range based on the vehicle 210, the controller 180 may output notification information indicating that the vehicle 210 is nearby in at least one of visual, auditory, and tactile manners. Further, as illustrated in FIG. 4B, the image received from the camera 121 may be output on the touch screen 151 even without the user's request.

More specifically, the controller 180 receives location information related to a current location from a sensor that senses the current location of the mobile terminal 100. The controller 180 may calculate a distance between the vehicle 210 and the current location and control the camera 121 and the touch screen 151 to output the image when the calculated distance is within the predetermined range.

Next, the controller 180 controls the touch screen 151 so that guide information for guiding a moving direction to capture a predetermined portion of the vehicle based on the vehicle information can be output on the image (S350).

The controller 180 may guide the predetermined portion of the vehicle to be captured by using an augmented reality (AR) technique that superimposes a virtual image on a captured image of a real world.

When a size of an area in which the vehicle 210 is not included or is included in the image is smaller than a reference size (or when a predetermined condition is not satisfied), navigation information 410 guiding a starting point to start capturing may be output, instead of the guide information.

As illustrated in FIG. 4B, when the size of the area in which the vehicle 210 is not included or is included in the image is smaller than the reference size, the controller 180 may control the touch screen 151 so that the navigation information 410 guiding the starting point to start capturing is output on the image. As the user moves, the navigation information 410 is also updated.

The controller 180, as illustrated in FIG. 4C, may display a highlight image 420 on the image to highlight a starting point to start capturing. The starting point is a common point for all of a plurality of users who have used or are to use the vehicle 210, and may be defined as a reference point for comparing images captured by the plurality of users.

As illustrated in FIG. 4C, a viewing angle adjustment image 422 for guiding a location where the vehicle 210 should be located in the image to be captured in a sufficient size may be output on the image.

When the predetermined condition is satisfied, guide information 430 may be displayed on the image, instead of the navigation information 410.

The guide information 430 may guide capturing of an entire area of the vehicle 210 or a predetermined portion of the entire area of the vehicle 210.

For example, as illustrated in FIG. 4E, the guide information may guide 360° scanning of the vehicle 210.

The controller 180 may divide the vehicle 210 into a first part which has been completely captured, and a second part which is needed to be captured as the capturing progresses, and control the touch screen 151 to output a guide image 440 on the image to guide the first and second parts to be distinguished from each other.

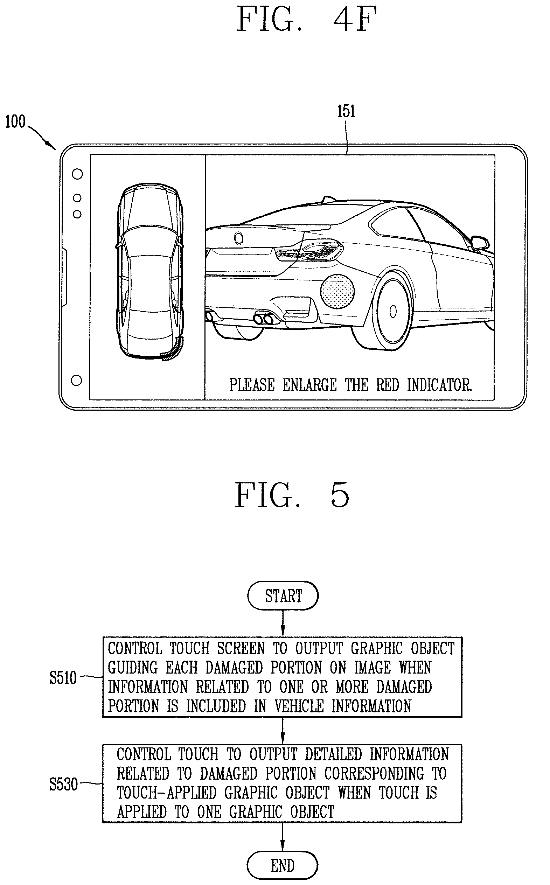

As illustrated in FIG. 4F, the guide information may guide the capturing to be performed only for the predetermined portion of the entire area of the vehicle 210.

The predetermined portion may vary according to the vehicle information. For example, according to a type of the vehicle 210, the predetermined portion may be different depending on whether the damage information is included in the vehicle information.

When the predetermined condition is satisfied, a capturing button 450 for generating proof data may be displayed on the image. The controller 180 controls the touch screen 151 so that the capturing button 450 is not displayed when the predetermined condition is not satisfied.

The controller 180 may perform capturing in response to a capturing command applied to the capturing button or perform capturing automatically in response to the predetermined condition being satisfied. An image or video generated by the capturing is transmitted to the server 220 and stored in the memory of the server 220 as proof data for verifying the state of the vehicle 100.

In order for the value of the proof data to be recognized, the predetermined portion should be captured according to a predetermined criterion. The predetermined criterion is a criterion that the predetermined portion has a predetermined composition at predetermined brightness and should be captured at a predetermined size. The predetermined criterion may be set differently according to the predetermined portion.

When there are a plurality of predetermined portions to be captured, the controller 180 sets a capturing order of the predetermined portions using the image and updates the guide information 430 such that each predetermined portion can be captured according to the capturing order.

For example, when a first portion and a second portion are to be captured, the controller 180 selects one of the portions which is located the closest using the image. The guide information 430 guides the one portion to be captured, and then guides the other to be captured after the one portion is captured.

In other words, even when the predetermined portions to be captured are the same, a predetermined portion guided by the guide information 430 may be different according to the location of the mobile terminal 100.

As described above, the mobile terminal 100 according to the present invention guides proof data for the use of the reserved vehicle 210 to be captured prior to using or returning the vehicle 210. In particular, by providing guide information for guiding capturing of a predetermined portion, an image of the predetermined portion may be captured according to a predetermined criterion, and the captured image may be utilized as proof data.

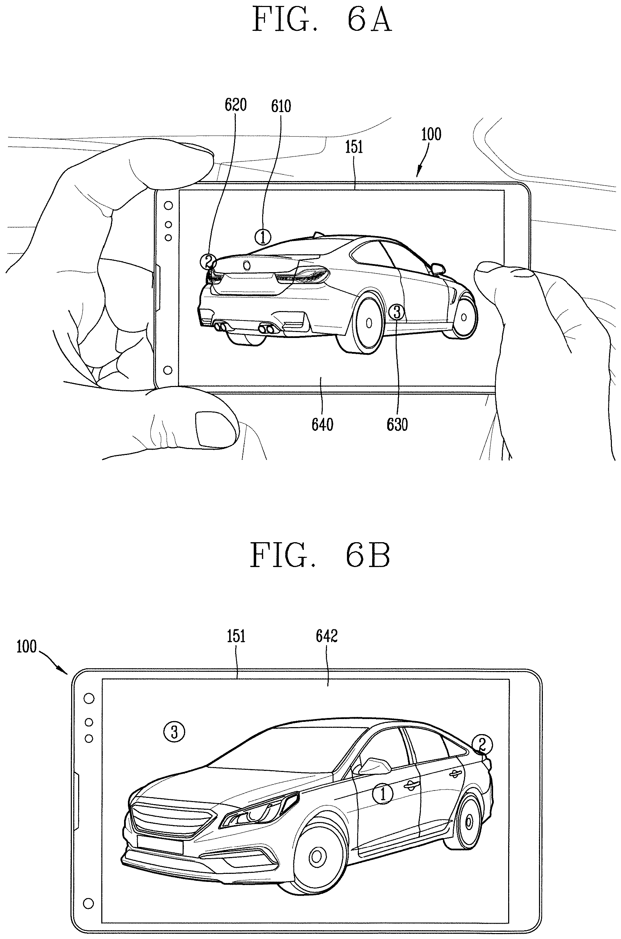

FIG. 5 is a flowchart illustrating a control method of a mobile terminal for guiding a damaged portion included in a vehicle, and FIGS. 6A to 6C are exemplary views illustrating operations of the mobile terminal according to the control method of FIG. 5.

As described above in FIG. 3, the vehicle information may include the damage information related to one or more damaged portions.

When the vehicle information includes information related to one or more damaged portions, the controller 180 controls the touch screen 151 to display at least one graphic object on the image to guide each of the one or more damaged portions (S510).

Based on the image currently output on the touch screen 151, the one or more damaged portions are classified into a first group included in the image and a second group not included in the image, and the damaged portions included in the first group and the damaged portions included in the second group are guided in different manners.

Since the user performs the capturing while moving, the image, more specifically, a vehicle portion included in the image changes. As the image changes, the damaged portions included in the first group and the damaged portions included in the second group may change.

Hereinafter, a case where first to third damaged portions are included in the vehicle information will be exemplarily described.

As illustrated in FIG. 6A, a first graphic object 610 corresponding to the first damaged portion, a second graphic object 620 corresponding to the second damaged portion, and a third graphic object 630 corresponding to the third damaged portion may be output on a first image 640. The second and third damaged portions may be classified into a first group and the first damaged portion may be classified into a second group based on the first image 640. This is because the first damaged portion is not included in the first image 640 and thereby cannot be visually confirmed.

As illustrated in FIG. 6B, when the first image 640 is changed to a second image 642, the first and second damaged portions may be included in the first group and the third damaged portion may be included in the second group based on the second image 642.

In the meantime, the controller 180 may control the touch screen 151 such that the second graphic object 620 of the second damaged portion and the third graphic object 630 of the third damaged portion included in the first group on the basis of the first image 640 may be output at positions corresponding to respective damaged portions of the vehicle 210 included in the image.

On the other hand, the first graphic object 610 of the first damaged portion included in the second group on the basis of the first image 640 is displayed in an area, in which the vehicle 210 is not included, of an entire area of the first image 640.

Since the graphic objects of the damaged portions included in the first group are displayed on the corresponding damaged portions, but the graphic object of the damaged portion included in the second group is displayed in an area, in which the vehicle 210 is not included, because the corresponding damaged portion is not included in the image.

The user can intuitively recognize where the damaged portion is located based on the display position of the graphic object included in the image.

Referring back to FIG. 5, the controller 180 may control the touch screen 151 to display detailed information related to a damaged portion corresponding to a touch-applied graphic object when the touch is applied to the graphic object (S530).

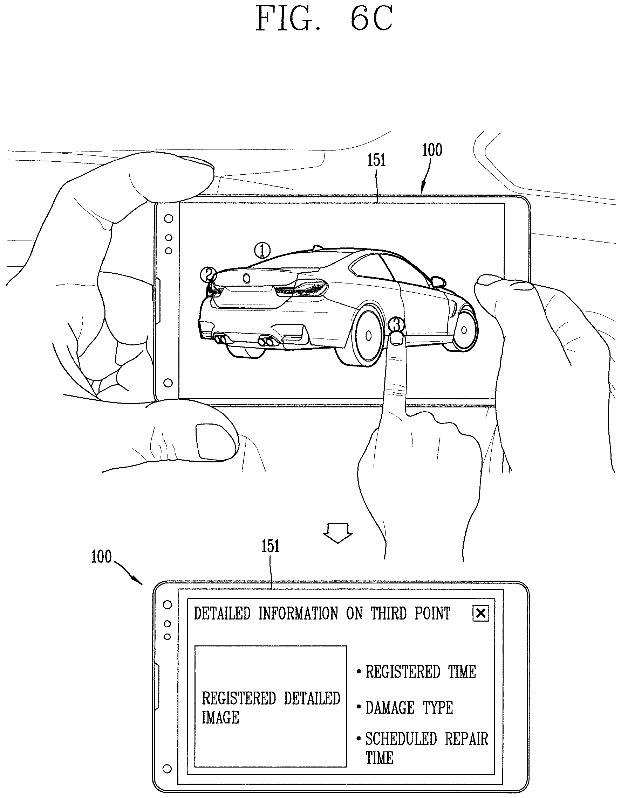

For example, as illustrated in FIG. 6C, when a touch is applied to the third graphic object 630, the image may disappear and detailed information related to the third damaged portion corresponding to the third graphic object 630 may be displayed on the touch screen 151. The detailed information may be displayed in a pop-up window on the image.

The detailed information may include a previously-captured image, a time registered as a damaged portion, a name of a damaged portion, a scheduled repair time, and the like.

In displaying the graphic objects on the image, the controller 180 may display the graphic objects in different manners according to a registered time point of a damaged portion corresponding to each graphic object. Here, the different manners may refer to different shapes, forms, and colors. For example, each graphic object may have a color with higher saturation when a registration time point of a damaged portion is more recent, and may have a color with lower saturation when a registration time point is earlier.

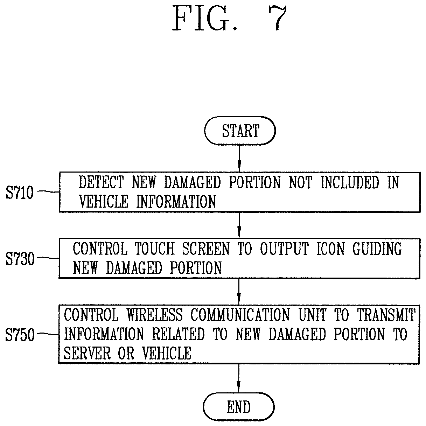

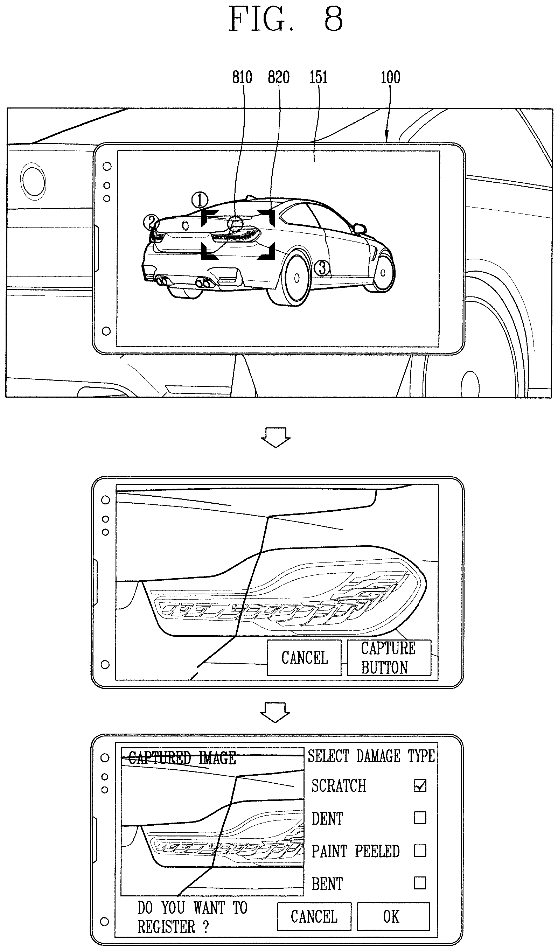

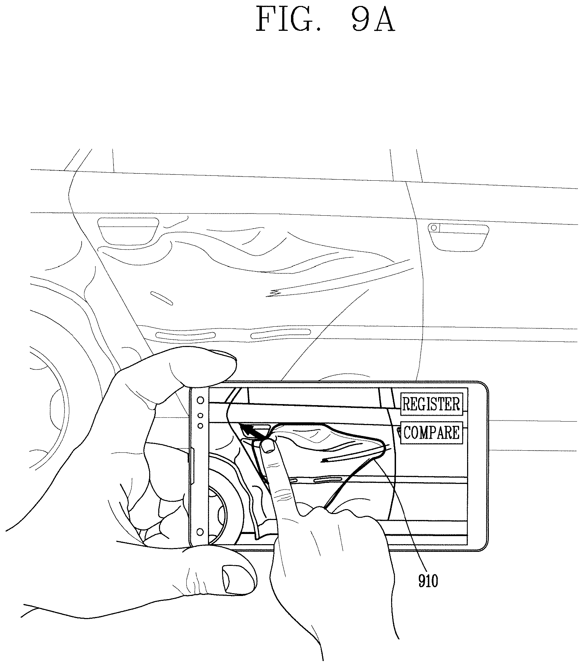

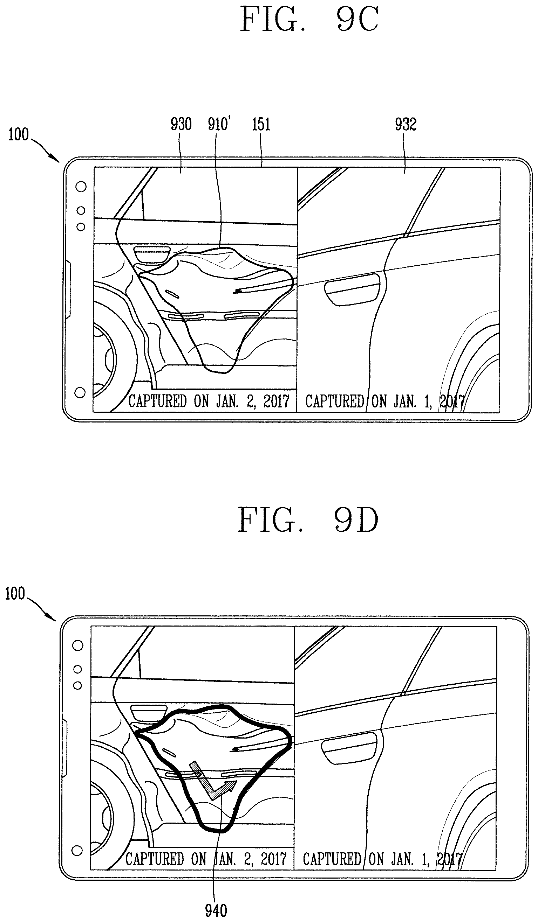

FIG. 7 is a flowchart illustrating a control method of the mobile terminal for guiding a new damaged portion included in the vehicle. FIGS. 8, 9A to 9C are exemplary views illustrating operations of the mobile terminal according to the control method of FIG. 7.

The controller 180 may detect (search for) a new damaged portion which is not included in the vehicle information (S710).

For example, the vehicle 210 may detect damage based on information received from a sensor provided therein while traveling, or may store the information received from the sensor in the memory thereof. The mobile terminal 100 may receive the information sensed by the vehicle 210 and may detect a new damaged portion which has not been registered in the server 220 based on the received information.

Specifically, the vehicle 210 may transmit an image captured by the camera provided therein to the mobile terminal 100 or the server 220 within a predetermined time range based on a time point when damage has been detected. The mobile terminal 100 or the server 220 may then detect the new damaged portion using the image transmitted from the vehicle 210.

For example, the controller 180 may also detect a new damaged portion, which is not included in the vehicle information, using an image currently output on the touch screen 151.

In detail, the controller 180 may receive a previously-captured image from the server 220 or the vehicle 210 and detect the new damaged portion by comparing the previously-captured image with the image currently output on the touch screen 151.

The previously-captured image refers to an image previously captured and stored in the server 220 or the vehicle 210.

Next, the controller 180 may control the touch screen 151 to display an icon for guiding the new damaged portion (S730).

As illustrated in FIG. 8, the controller 180 controls the touch screen 151 so that an icon 810 guiding the new damaged portion is displayed on the image when the new damaged portion is detected.

The user can quickly and easily check the new damaged portion using the icon 810 that appears newly while capturing the vehicle 210.

As illustrated in FIG. 9A, the controller 180 may display an image 910 connecting an edge of the new damaged portion. This may allow the user to identify (or check) a location, a size and a shape of the new damaged portion.

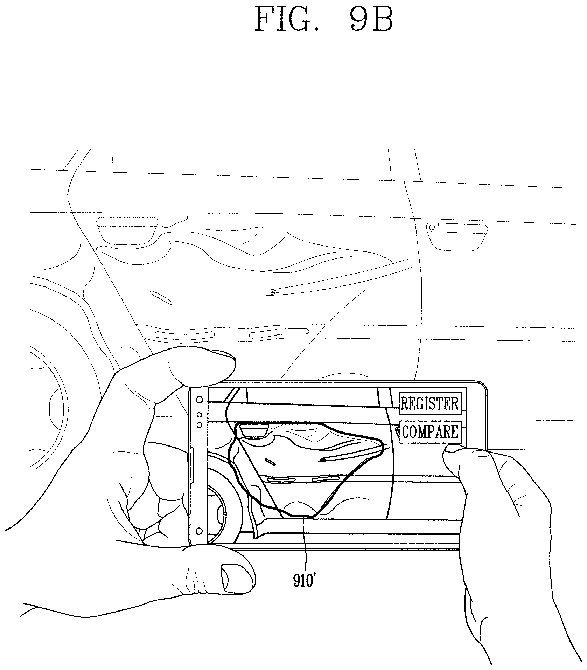

Further, as illustrated in FIGS. 9A and 9B, the controller 180 may change the edge of the new damaged portion, in response to a touch being applied to the image. The image is also varied according to the touch (910 -> 910')

According to the present invention, a user interface is provided for allowing a user to more precisely determine a new damaged portion while detecting the new damaged portion according to an algorithm and guiding the detected new damaged portion to the user.

Meanwhile, when the new damaged portion is detected, the controller 180 may control the touch screen to output at least portion 930 of the image in a first area of the touch screen and a previously-captured image 932, which is a criterion for determining the new damaged portion, to be output in a second area.

The user can more accurately identify and confirm the new damaged portion by comparing the previous-captured image 932 with the at least portion 930 of the image.

As illustrated in FIG. 9D, the controller 180 changes the guide information to guide capturing of the new damaged portion. The changed guide information 940 guides a moving direction so that the camera 121 has the same frame (or composition or perspective) as the previously-captured image.

Next, the controller 180 may control the wireless communication unit 210 to transmit new damage information related to the new damaged portion to the server 220 or the vehicle 210 (S750).

When the image output on the touch screen 151 satisfies a condition suitable for capturing, the guide information disappears from the touch screen 151. Then, the controller 180 may capture the new damaged portion and store the captured image and/or video in the memory 170.

The controller 180 may generate new damage information corresponding to the new damaged portion. The new damage information may include the captured image and/or video. The controller 180 may analyze a location, a size, and a shape of the damage using the image, and classify a type of the damage (dent, scratch, crack, impact angle, and impact strength). The analyzed and classified information is included in the new damage information.

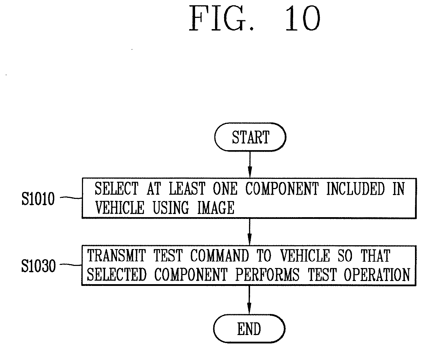

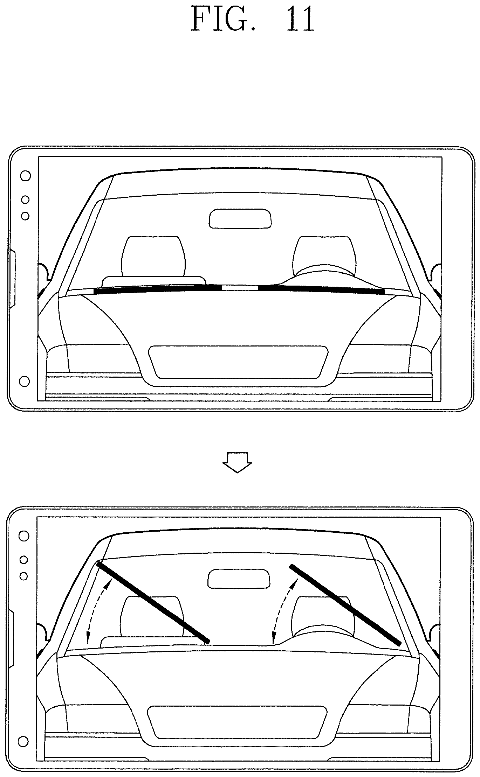

FIG. 10 is a flowchart illustrating a control method of the mobile terminal for testing at least one component provided in the vehicle, and FIG. 11 is an exemplary view illustrating an operation of the mobile terminal according to the control method of FIG. 10.

The controller 180 selects at least one of components included in the vehicle 210 using the image (S1010).

In detail, the controller 180 may calculate a rate of change of the image displayed on the touch screen 151 for a predetermined time, and select the at least one component using the image when the calculated rate of change is within a reference range.

For example, as illustrated in FIG. 11, when the user does not change a capturing direction for a predetermined time while capturing the vehicle in a manner that a wiper of the vehicle is located at a center of the touch screen 151, the controller 180 may determine that the user intends to test the wiper of the vehicle. In this case, the controller 180 selects the wiper of the vehicle.

The selected component is changed according to the image displayed on the touch screen 151. For example, when a front left lamp is being captured, the front left lamp may be selected. On the other hand, when a rear right lamp is being captured, the rear right lamp may be selected.

Next, the controller transmits a test command to the vehicle 210 so as to perform a test operation for the selected component (S1030). When the capturing direction is changed during the test operation and accordingly the selected component is not included in the image, the controller 180 may transmit a test end command to the vehicle 210 so that the test operation is terminated.

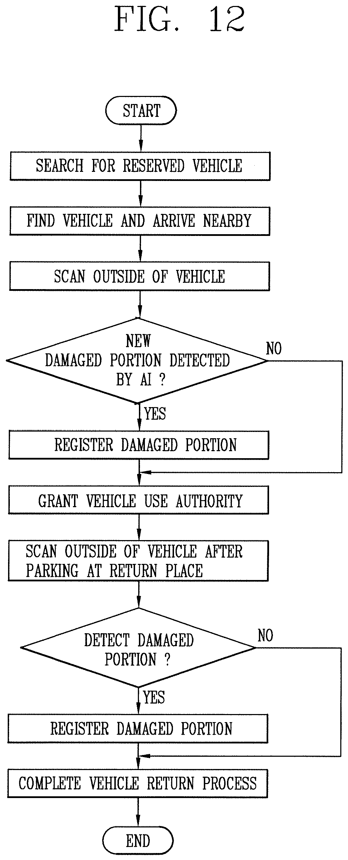

FIG. 12 is a flowchart illustrating operations executed in the system of FIG. 2 in the order of time.

The mobile terminal 100 according to the present invention receives vehicle information related to the reserved vehicle 210 from the server 220. Specifically, the controller 180 may detect a location of the vehicle 210 and output navigation information based on the vehicle information and a current location of the mobile terminal 100.

Then, the controller 180 may scan outside and/or inside of the vehicle 210 using the camera 121.

Scanning refers to a process of providing guide information so that a predetermined portion of the vehicle 210 is captured, and detecting a new damaged portion of the vehicle 210 using an image output on the touch screen 151. When a capturing condition is satisfied during the scanning, the predetermined portion may be automatically captured and an image and/or video corresponding to the predetermined portion may be generated.

When the new damaged portion is detected, the controller 180 generates new damage information corresponding to the new damaged portion and transmits the new damage information to the server 220 and/or the vehicle 210. The new damage information may be registered and accordingly be used by a mobile terminal of the next user to detect another new damage information.

Even if the controller 180 fails to detect the new damage portion, the user can register the new damaged portion in the server 220 in a direct capturing manner.

Meanwhile, the controller 180 may control the wireless communication unit 110 to perform at least one of a first control of preventing unlocking of the vehicle 210, and a second control of preventing a start-up of the vehicle 210 until the capturing for the predetermined portion satisfies a predetermined condition.

The controller 180 may control the wireless communication unit 110 to transmit the image of the predetermined portion to the server 220 or the vehicle 210. When an approval message for the image is received, the controller 180 may control the touch screen 151 to output an interface for unlocking the vehicle 210 or starting up the vehicle 210.

That is, the user is granted a control authority to use the vehicle 210 only after proof data is generated by completely capturing the predetermined portion.

Capturing for a predetermined portion may be required not only when borrowing a vehicle but also when returning a used vehicle.

For example, in a state where a predetermined time is left up to a return time of the vehicle 210 or it is past the return time, when the user turns off the vehicle 210, the camera 121 and the touch screen 151 may be activated to perform the capturing for the predetermined portion.

As another example, when the operation of the vehicle 210 is terminated, the controller 180 may detect a portion of the vehicle 210 that has experienced an impact during traveling based on information received from the vehicle 210, and provide the guide information so that the detected portion can be captured.

The controller 180 may detect a new damaged portion by comparing a first image captured by the user before boarding the vehicle 210 with a second image captured at a time point of returning the vehicle 210. For this purpose, a service can be provided so that the return process can be completed only when the second image is captured. That is, the return process of the vehicle 210 may be completed only when the capturing for the predetermined portion is completed.

Meanwhile, the mobile terminal and the control method thereof according to examples not covered by the claims are not limited to a vehicle, but can extend to personal properties or real estates that a plurality of users borrow for use through a sharing economy. For example, when a house is registered in a server, the mobile terminal may determine whether the house registered in the server is included in an image received from a camera using location information such as GPS. When the house registered in the server is included in the image, the mobile terminal may output on the touch screen guide information for guiding a moving direction to capture a predetermined portion of the house together with the image, on the basis of house information received from the server. That is, in the embodiments of the present invention described above, the vehicle may be replaced with a personal property or real estate registered in the server.

The present invention can be implemented as computer-readable codes in a program-recorded medium. The computer-readable medium may include all types of recording devices each storing data readable by a computer system. Examples of such computer-readable media may include hard disk drive (HDD), solid state disk (SSD), silicon disk drive (SDD), ROM, RAM, CD-ROM, magnetic tape, floppy disk, optical data storage element and the like. Also, the computer-readable medium may also be implemented as a format of carrier wave (e.g., transmission via an Internet). The computer may include the controller 180 of the terminal.

## Claims

1. A mobile terminal (100), comprising:
a camera (121);
a touch screen (151) configured to output an image received from the camera (121);
a wireless communication unit (110) configured to receive, from a vehicle (210) or a server (220), vehicle information associated with the vehicle (210); and
a controller (180) configured to control the touch screen (151) to output guide information on the image to guide a moving direction of the mobile terminal (100) such that a predetermined portion of the vehicle (210) is captured based on the vehicle information,
**characterised in that** the controller (180) is configured to select at least one component included in the vehicle (210) using the image and to transmit a test command to the vehicle (210) through the wireless communication unit (110) so as to perform a test operation for the selected component.

2. The mobile terminal (100) of claim 1, wherein the controller (180) is configured to control the touch screen (151) to output at least one graphic object on the image to guide a moving direction of the mobile terminal (100) to capture one or more damaged portions, respectively, when information related to the one or more damaged portions is included in the vehicle information.

3. The mobile terminal (100) of claim 2, wherein the one or more damaged portions are classified into a first group included in the image and a second group not included in the image based on the image currently output on the touch screen (151), and
wherein a damaged portion included in the first group and a damaged portion included in the second group are guided in different manners.

4. **The** mobile terminal (100) of claim 3, wherein the controller (180) is configured to control the mobile terminal such that the classification of the damaged portion included in the first group and the damaged portion included in the second group changes as the image changes.

5. **The** mobile terminal (100) of claim 3 or 4, wherein the controller (180) is further configured to:
control the touch screen (151) to output a first graphic object (610) of a first damaged portion included in the first group on a position corresponding to the first damaged portion on the vehicle (210) included in the image; and
control the touch screen (151) to output a second graphic object (620) on the image, wherein the second graphic object (620) corresponds to a second damaged portion included in the second group, wherein the second graphic object (620) is output in an area of the image in which the vehicle (210) is not included.

6. The mobile terminal (100) of any one of claims 1 to 5, wherein the controller (180) is configured to detect a new damaged portion not included in the vehicle information, and to control the touch screen (151) to output an icon (810) for guiding a user to the new damaged portion on the image when the new damaged portion is detected.

7. The mobile terminal (100) of claim 6, wherein the controller (180) is configured to control the wireless communication unit (110) to transmit information related to the new damaged portion to the server or the vehicle (210).

8. The mobile terminal (100) of claim 6 or 7, wherein the controller (180) is configured to, when the new damaged portion is detected, control the touch screen (151) to output at least part of the image in a first area of the touch screen (151), and to output a previously-captured image as a reference for determining the new damaged portion in a second area of the touch screen (151).

9. The mobile terminal (100) of claim 8, wherein the predetermined portion of the guide information is changed into the new damaged portion when the new damaged portion is detected, and
wherein the changed guide information guides a moving direction so that the camera (121) has a same perspective as the previously-captured image.

10. The mobile terminal (100) of any one of the preceding claims, wherein the controller (180) is configured to select the at least one component using the image when a rate of change of the image is within a reference range for a predetermined time.

11. The mobile terminal (100) of any one of claims 1 to 10, wherein the controller (180) is configured to divide the vehicle (210) into a first part which is completely captured, and a second part which is needed to be captured as the capturing progresses, and to control the touch screen (151) to output a guide image on the image such that the first part and the second part are distinguished from each other.

12. The mobile terminal (100) of any one of claims 1 to 11, further comprising a sensor to sense a current location of the mobile terminal,
wherein the controller (180) is configured to calculate a distance between the vehicle (210) and the current location, and to control the camera (121) and the touch screen (151) to output the image when the calculated distance is within a predetermined range.

13. The mobile terminal (100) of any one of claims 1 to 12, wherein the controller (180) is configured to control the touch screen (151) to output navigation information (410) for guiding a user to a starting point for starting capturing of the image when a size of an area in which the vehicle (210) is not included or is included in the image is smaller than a reference size.

14. The mobile terminal (100) of any one of claims 1 to 13, wherein the controller (180) is configured to control the wireless communication unit (110) to perform at least one of a first control for preventing unlocking of the vehicle (210) and a second control for preventing a start-up of the vehicle (210) until the capturing for the predetermined portion satisfies a predetermined condition.

## Patentansprüche

1. Mobiles Endgerät (100), das aufweist:
eine Kamera (121);
einen berührungsempfindlichen Bildschirm (151), der dazu konfiguriert ist, ein von der Kamera (121) empfangenes Bild auszugeben;
eine Drahtlos-Kommunikationseinheit (110), die dazu konfiguriert ist, von einem Fahrzeug (210) oder einem Server (220) mit dem Fahrzeug (210) verknüpfte Fahrzeuginformationen zu empfangen; und
eine Steuereinheit (180), die konfiguriert ist, den berührungsempfindlichen Bildschirm (151) zu steuern, um Führungsinformationen auf dem Bild auszugeben, um eine Bewegungsrichtung des mobilen Endgeräts (100) zu führen, sodass ein vorbestimmter Bereich des Fahrzeugs (210) basierend auf den Fahrzeuginformationen erfasst wird,
**dadurch gekennzeichnet, dass**
die Steuereinheit (180) konfiguriert ist, wenigstens eine im Fahrzeug (210) enthaltene Komponente mittels des Bilds auszuwählen und einen Testbefehl an das Fahrzeug (210) über die Drahtlos-Kommunikationseinheit (110) zu übertragen, um so einen Testbetrieb für die ausgewählte Komponente durchzuführen.

2. Mobiles Endgerät (100) nach Anspruch 1, wobei die Steuereinheit (180) konfiguriert ist, den berührungsempfindlichen Bildschirm (151) zu steuern, um wenigstens ein Grafikobjekt auf dem Bild auszugeben, um eine Bewegungsrichtung des mobilen Endgeräts (100) zu führen, um jeweils einen oder mehrere beschädigte Bereiche zu erfassen, wenn Informationen bezüglich des einen oder der mehreren beschädigten Bereiche in den Fahrzeuginformationen enthalten sind.

3. Mobiles Endgerät (100) nach Anspruch 2, wobei der eine oder die mehreren beschädigten Bereiche basierend auf dem Bild, das aktuell auf den berührungsempfindlichen Bildschirm (151) ausgegeben wird, in eine ersten Gruppe, die im Bild enthalten ist, und eine zweite Gruppe, die nicht im Bild enthalten ist, klassifiziert wird/werden und
wobei ein in der ersten Gruppe enthaltener beschädigter Bereich und ein in der zweiten Gruppe enthaltener beschädigter Bereich in verschiedenen Weisen geführt werden.

4. Mobiles Endgerät (100) nach Anspruch 3, wobei die Steuereinheit (180) konfiguriert ist, das mobile Endgerät zu steuern, sodass die Klassifizierung des in der ersten Gruppe enthaltenen beschädigten Bereichs und des in der zweiten Gruppe enthaltenen beschädigten Bereichs sich verändert, wenn sich das Bild ändert.

5. Mobiles Endgerät (100) nach Anspruch 3 oder 4, wobei die Steuereinheit (180) weiterhin dazu konfiguriert ist:
den berührungsempfindlichen Bildschirm (151) zu steuern, ein erstes Grafikobjekt (610) eines in der ersten Gruppe enthaltenen ersten beschädigten Bereichs an einer Position auszugeben, die dem im Bild enthaltenen ersten beschädigten Bereich am Fahrzeug (210) entspricht; und
den berührungsempfindlichen Bildschirm (151) zu steuern, ein zweites Grafikobjekt (620) auf dem Bild auszugeben, wobei das zweite Grafikobjekt (620) einem in der zweiten Gruppe enthaltenen zweiten beschädigten Bereich entspricht, wobei das zweite Grafikobjekt (620) in einem Gebiet des Bilds ausgegeben wird, in dem das Fahrzeug (210) nicht enthalten ist.

6. Mobiles Endgerät (100) nach einem der Ansprüche 1 bis 5, wobei die Steuereinheit (180) konfiguriert ist, einen neuen beschädigten Bereich zu erfassen, der nicht in den Fahrzeuginformationen enthalten ist, und den berührungsempfindlichen Bildschirm (151) zu steuern, ein Symbol (810) auszugeben, um einen Benutzer zu dem neuen beschädigten Bereich auf dem Bild zuführen, wenn der neue beschädigte Bereich erfasst wird.

7. Mobiles Endgerät (100) nach Anspruch 6, wobei die Steuereinheit (180) konfiguriert ist, die Drahtlos-Kommunikationseinheit (110) zu steuern, Informationen bezüglich des neuen beschädigten Bereichs an den Server oder das Fahrzeug (210) zu übertragen.

8. Mobiles Endgerät (100) nach Anspruch 6 oder 7, wobei die Steuereinheit (180) konfiguriert ist, wenn der neue beschädigte Bereich erfasst wird, den berührungsempfindlichen Bildschirm (151) zu steuern, wenigstens einen Teil des Bilds in einem ersten Gebiet des berührungsempfindlichen Bildschirms (151) auszugeben und ein zuvor erfasstes Bild als eine Referenz auszugeben, um den neuen beschädigten Bereich in einem zweiten Gebiet des berührungsempfindlichen Bildschirms (151) zu bestimmen.

9. Mobiles Endgerät (100) nach Anspruch 8, wobei der vorbestimmte Bereich der Führungsinformationen in den neuen beschädigten Bereich geändert wird, wenn der neue beschädigte Bereich erfasst wird, und
wobei die geänderten Führungsinformationen eine Bewegungsrichtung führen, sodass die Kamera (121) eine gleiche Perspektive wie das zuvor erfasste Bild hat.

10. Mobiles Endgerät (100) nach einem der vorhergehenden Ansprüche, wobei die Steuereinheit (180) konfiguriert ist, die wenigstens eine Komponente unter Verwendung des Bilds auszuwählen, wenn eine Änderungsrate des Bilds für eine vorbestimmte Zeit in einem Referenzbereich liegt.

11. Mobiles Endgerät (100) nach einem der Ansprüche 1 bis 10, wobei die Steuereinheit (180) konfiguriert ist, das Fahrzeug (210) in einen ersten Teil zu unterteilen, der vollständig erfasst wird, und einen zweiten Teil, der erfasst werden muss, wenn die Erfassung weitergeht, und den berührungsempfindlichen Bildschirm (151) zu steuern, ein Führungsbild auf dem Bild auszugeben, sodass der erste Teil und der zweite Teil voneinander unterschieden werden.

12. Mobiles Endgerät (100) nach einem der Ansprüche 1 bis 11, das weiterhin einen Sensor aufweist, um eine aktuelle Position des mobilen Endgeräts zu erfassen,
wobei die Steuereinheit (180) konfiguriert ist, einen Abstand zwischen dem Fahrzeug (210) und der aktuellen Position zu berechnen, und die Kamera (121) und den berührungsempfindlichen Bildschirm (151) zu steuern, das Bild auszugeben, wenn der berechnete Abstand in einem vorbestimmten Bereich liegt.

13. Mobiles Endgerät (100) nach einem der Ansprüche 1 bis 12, wobei die Steuereinheit (180) konfiguriert ist, den berührungsempfindlichen Bildschirm (151) zu steuern, um Navigationsinformationen (410) auszugeben, um einen Benutzer zu einem Startpunkt zum Start der Bilderfassung zu führen, wenn eine Größe eines Gebiets, in der das Fahrzeug (210) nicht im Bild enthalten ist oder enthalten ist, kleiner als eine Referenzgröße ist.

14. Mobiles Endgerät (100) nach einem der Ansprüche 1 bis 13, wobei die Steuereinheit (180) konfiguriert ist, die Drahtlos-Kommunikationseinheit (110) zu steuern, um wenigstens eine von der ersten Steuerung zum Verhindern des Entsperrens des Fahrzeugs (210) und einer zweiten Steuerung zum Verhindern eines Startens des Fahrzeugs (210) durchzuführen, bis die Erfassung für den vorbestimmten Bereich eine vorbestimmte Bedingung erfüllt.

## Revendications

1. Terminal mobile (100), comprenant :
une caméra (121) ;
un écran tactile (151) configuré pour sortir une image reçue depuis la caméra (121) ;
une unité de communication sans fil (110) configurée pour recevoir, depuis un véhicule (210) ou un serveur (220), des informations de véhicule associées au véhicule (210) ; et
un contrôleur (180) configuré pour commander l'écran tactile (151) et l'amener à sortir des informations de guidage sur l'image pour guider une direction de déplacement du terminal mobile (100) de telle sorte qu'une portion prédéterminée du véhicule (210) est capturée sur la base des informations de véhicule,
**caractérisé en ce que**
le contrôleur (180) est configuré pour sélectionner au moins un composant inclus dans le véhicule (210) à l'aide de l'image et pour transmettre un ordre de test au véhicule (210) par l'intermédiaire de l'unité de communication sans fil (110) afin d'effectuer une opération de test pour le composant sélectionné.

2. Terminal mobile (100) selon la revendication 1, dans lequel le contrôleur (180) est configuré pour commander l'écran tactile (151) et l'amener à sortir au moins un objet graphique sur l'image pour guider une direction de déplacement du terminal mobile (100) pour capturer une ou plusieurs portions endommagées, respectivement, quand des informations en lien avec lesdites une ou plusieurs portions endommagées sont incluses dans les informations de véhicule.

3. Terminal mobile (100) selon la revendication 2, dans lequel lesdites une ou plusieurs portions endommagées sont classifiées en un premier groupe inclus dans l'image et un second groupe non inclus dans l'image sur la base de l'image actuellement sortie sur l'écran tactile (151), et
dans lequel une portion endommagée incluse dans le premier groupe et une portion endommagée incluse dans le second groupe sont guidées d'une manière différente.

4. Terminal mobile (100) selon la revendication 3, dans lequel le contrôleur (180) est configuré pour commander le terminal mobile de sorte que la classification de la portion endommagée incluse dans le premier groupe et de la portion endommagée incluse dans le second groupe change lorsque l'image change.

5. Terminal mobile (100) selon la revendication 3 ou 4, dans lequel le contrôleur (180) est en outre configuré pour :
commander l'écran tactile (151) et l'amener à sortir un premier objet graphique (610) d'une première portion endommagée incluse dans le premier groupe sur une position correspondant à la première portion endommagée sur le véhicule (210) inclus dans l'image ; et
commander **l'écran** tactile (151) et l'amener à sortir un second objet graphique (620) sur l'image, le second objet graphique (620) correspondant à une seconde portion endommagée incluse dans le second groupe, le second objet graphique (620) étant sorti dans une zone de l'image dans laquelle le véhicule (210) n'est pas inclus.

6. Terminal mobile (100) selon l'une quelconque des revendications 1 à 5, dans lequel le contrôleur (180) est configuré pour détecter une nouvelle portion endommagée non incluse dans les informations de véhicule, et pour commander l'écran tactile (151) et l'amener à sortir une icône (810) destinée à guider un utilisateur vers la nouvelle portion endommagée sur l'image quand la nouvelle portion endommagée est détectée.

7. Terminal mobile (100) selon la revendication 6, dans lequel le contrôleur (180) est configuré pour commander l'unité de communication sans fil (110) et l'amener à sortir des informations en lien avec la nouvelle portion endommagée vers le serveur ou le véhicule (210).

8. Terminal mobile (100) selon la revendication 6 ou 7, dans lequel le contrôleur (180) est configuré pour, quand la nouvelle portion endommagée est détectée, commander l'écran tactile (151) et l'amener à sortir au moins une partie de l'image dans une première zone de l'écran tactile (151), et l'amener à sortir une image précédemment capturée à titre référence pour déterminer la nouvelle portion endommagée dans une seconde zone de l'écran tactile (151).

9. Terminal mobile (100) selon la revendication 8, dans lequel la portion prédéterminée des informations de guidage est changée en la nouvelle portion endommagée quand la nouvelle portion endommagée est détectée, et
dans lequel les informations de guidage changées guident une direction de déplacement de sorte que la caméra (121) a une même perspective que l'image précédemment capturée.

10. Terminal mobile (100) selon l'une quelconque des revendications précédentes, dans lequel le contrôleur (180) est configuré pour sélectionner ledit au moins un composant à l'aide de l'image qu'en taux de changement de l'image est à l'intérieur d'une plage de référence pendant une durée prédéterminée.

11. Terminal mobile (100) selon l'une quelconque des revendications 1 à 10, dans lequel le contrôleur (180) est configuré pour diviser le véhicule (210) en une première partie qui est complètement capturée, et en une seconde partie qui doit être capturée lorsque la capture progresse, et pour commander l'écran tactile (151) et l'amener à sortir une image de guidage sur l'image de sorte que la première partie et la seconde partie sont différenciées l'une de l'autre.

12. Terminal mobile (100) selon l'une quelconque des revendications 1 à 11, comprenant en outre un capteur pour détecter un emplacement actuel du terminal mobile,
dans lequel le contrôleur (180) est configuré pour calculer une distance entre le véhicule (210) et l'emplacement actuel, et pour commander la caméra (121) et l'écran tactile (151) et les amener à sortir l'image quand la distance calculée est à l'intérieur d'une plage prédéterminée.

13. Terminal mobile (100) selon l'une quelconque des revendications 1 à 12, dans lequel le contrôleur (180) est configuré pour commander l'écran tactile (151) et l'amener à sortir des informations de navigation (410) destinées à guider un utilisateur vers un point de départ pour démarrer une capture de l'image quand une taille d'une zone dans laquelle le véhicule (210) n'est pas incluse ou est incluse dans l'image est inférieure à une taille de référence.

14. Terminal mobile (100) selon l'une quelconque des revendications 1 à 13, dans lequel le contrôleur (180) est configuré pour commander l'unité de communication sans fil (110) et l'amener à effectuer l'une au moins d'une première commande destinée à empêcher un déverrouillage du véhicule (210) et une seconde commande destinée à empêcher un démarrage (210) jusqu'à ce que la capture pour la portion prédéterminée remplisse une condition prédéterminée.
